**Europäisches Patentamt**

**European Patent Office**

**Office européen des brevets**

(19)

(11) Veröffentlichungsnummer: **0 000 766**
**B1**

(12) **EUROPÄISCHE PATENTSCHRIFT**

(45) Veröffentlichungstag der Patentschrift: **16.09.81**

(21) Anmeldenummer: **78100566.5**

(22) Anmeldetag: **01.08.78**

(51) Int. Cl.³: **C 08 F 6/24,** C 08 F 10/02,
C 08 J 11/02

(54) Verfahren zum Herstellen von Homo- und Copolymerisaten des Äthylens.

(30) Priorität: **05.08.77 DE 2735355**

(43) Veröffentlichungstag der Anmeldung:
**21.02.79 Patentblatt 79/4**

(45) Bekanntmachung des Hinweises auf die Patenterteilung:
**16.09.81 Patentblatt 81/37**

(84) Benannte Vertragsstaaten:
**BE CH DE FR GB NL SE**

(56) Entgegenhaltungen:
**DE - A - 2 002 806**
**NL - A - 7 514 733**
**US - A - 3 152 872**

(73) Patentinhaber: **BASF Aktiengesellschaft**
**Carl-Bosch-Strasse 38**
**D-6700 Ludwigshafen (DE)**

(72) Erfinder: **Pfeiffer, Erich**
**Friedensweg 69**
**D-5047 Wesseling (DE)**

## Verfahren zum Herstellen von Homo- und Copolymerisaten des Äthylens

Die vorliegende Erfindung betrifft ein Verfahren zum kontinuierlichen Herstellen von Homopolymerisaten des Äthylens oder Copolymerisaten des Äthylens mit bis zu 15 Mol.% — bezogen auf das Äthylen — $C_3$- bis $C_8$-$\alpha$-Monoolefinen durch katalytische Polymerisation des bzw. der Monomeren bei Temperaturen von 60 bis 115°C und Äthylenpartialdrücken von 1 bis 40 bar in einem unter den Polymerisationsbedingungen flüssigen alkanischen $C_4$- bis $C_6$-Kohlenwasserstoff, der für das Monomere bzw. die Monomeren ein Löser, für das gebildete Polymerisat ein Nichtlöser ist, und wobei das Polymerisat isoliert wird, indem man

(a) aus dem Polymerisationsraum ein Gemisch aus im wesentlichen Polymerisat, alkanischem Kohlenwasserstoff und Monomerem bzw. Monomeren austrägt,

(b) das Gemisch aus Stufe (a) auf 0,1 bis 2 bar Überdruck sowie eine Temperatur von 20 bis 120°C bringt unter Bildung einer gasförmigen, im wesentlichen aus dem bzw. den Monomeren und alkanischem Kohlenwasserstoff bestehenden Phase — deren Bestandteile wieder in den Polymerisationsraum zurückgeführt werden — und einer festern, im wesentlichen aus Polymerisat mit 0,1 bis 8 Gewichtsprozent, bezogen auf das Gewicht des Polymerisats, anhaftendem alkanischen Kohlenwasserstoff bestehenden Phase, und

(c) die feste Phase aus Stufe (b) bei 0 bis 1 bar Überdruck sowie einer Temperatur von 20 bis 130°C mit der 1- bis 30-fachen Volumenmenge — bezogen auf das Polymerisat — Inertgas spült unter Bildung einer festen, aus weitgehend reinem Polymerisat bestehenden Phase — die als solche separiert wird — und einer gasförmigen, im wesentlichen aus alkanischem Kohlenwasserstoff und Inertgas bestehenden Phase.

Verfahren dieser Art sind bekannt; sie werden im allgemeinen als "PF-Verfahren" (= particle-form-Verfahren) bezeichnet und sind in ihrem grundsätzlichen Aspekt z.B. in der österreichischen Patentschrift 222 349 beschrieben. Eine in der industriellen Praxis bewährte besondere Ausgestaltung des Verfahrens arbeitet mit einem schleifenförmigen Reaktionsgefäß und ist z.B. in der deutschen Patentschrift 1 520 461 beschrieben.

Es liegt in der Natur des PF-Verfahrens, daß die Polymerisate im Zuge ihrer Isolierung intermediär vorliegen in Form von Polymerisatpartikeln, denen noch geringe Mengen des als Polymerisationsmedium dienenden alkanischen Kohlenwasserstoffs anhaften (= feste Phase aus Stufe (b)). Zur Entfernung dieses anhaftenden alkanischen Kolenwasserstoffs werden die Polymerisate in bestimmter Weise mit einem Inertgas gespült, wobei ein gasförmiges Gemisch — im wesentlichen — aus alkanischem Kohlenwasserstoff und Inertgas anfällt (= gasförmige Phase aus Stufe (c)).

Da eine wirtschaftliche Aufarbeitung dieses Gemischs — und somit die an sich wünschenswerte Wiedergewinnung der Einzelkomponenten des Gemischs — bislang nicht möglich war, wird bei den bekannten industriellen Ausgestaltungen des PF-Verfahrens das besagte Gemisch in die Atmosphäre entlassen, sei es als solches, sei es über eine Verbrennung; — was jeweils wiederum Umweltprobleme aufwirft.

Hiervon ausgehend war es die Aufgabenstellung zur vorliegenden Erfindung, ein PF-Verfahren der eingangs definierten Art aufzuzeigen, in dessen Rahmen es möglich ist, das in Rede stehende gasförmige Gemisch (= gasförmige Phase aus Stufe (c)) wirtschaftlich so aufzuarbeiten, daß die wiedergewonnenen Einzelkomponenten des Gemischs in unmittelbar für das Verfahren wiederverwertbarer Form anfallen.

Es wurde gefunden, daß die gestellte Aufgabe gelöst werden kann, wenn man eine Aufarbeitung der Komponenten des in Rede stehenden gasförmigen Gemischs bewirkt durch bestimmte integrierte — insbesondere in das Verfahren selbst integrierte — Verflüssigungs- und Verdampfungsvorgänge.

Gegenstand der vorliegenden Erfindung ist dementsprechend ein Verfahren zum kontinuierlichen Herstellen von Homopolymerisaten des Äthylens oder Copolymerisaten des Äthylens mit bis zu 15 Mol.% — bezogen auf das Äthylen — $C_3$- bis $C_8$-$\alpha$-Monoolefinen durch katalytische Polymerisation des bzw. der Monomeren bei Temperaturen von 60 bis 115°C und Äthylenpartialdrücken von 1 bis 40 bar in einem unter den Polymerisationsbedingungen flüssigen alkanischen $C_4$- bis $C_6$-Kohlenwasserstoff, der für das Monomere bzw. die Monomeren ein Löser, für das gebildete Polymerisat ein Nichtlöser ist, und wobei das Polymerisat isoliert wird, indem man

(a) aus dem Polymerisationsraum ein Gemisch aus im wesentlichen Polymerisat, alkanischem Kohlenwasserstoff und Monomerem bzw. Monomeren austrägt,

(b) das Gemisch aus Stufe (a) auf 0,1 bis 2 bar Überdruck sowie eine Temperatur von 20 bis 120°C bringt unter Bildung einer gasförmigen, im wesentlichen aus dem bzw. den Monomeren und alkanischem Kohlenwasserstoff bestehenden Phase — deren Bestandteile wieder in den Polymerisationsraum zurückgeführt werden — und einer festen, im wesentlichen aus Polymerisat mit 0,1 bis 8 Gewichtsprozent, bezogen auf das Gewicht des Polymerisats, anhaftendem alkanischen Kohlenwasserstoff bestehenden Phase, und

(c) die feste Phase aus Stufe (b) bei 0 bis 1 bar Überdruck sowie einer Temperatur von 20 bis 130°C mit der 1- bis 30-fachen Volumenmenge — bezogen auf das Polymerisat — Inertgas spült unter Bildung einer festen, aus weitgehend reinem Polymerisat bestehenden Phase — die als solche separiert wird — und einer gasförmigen, im wesentlichen aus alkanischem Kohlenwasserstoff und Inertgas bestehenden Phase.

Das erfindungsgemäße Verfahren ist dadurch gekennzeichnet, daß man als zusätzliche Maßnahmen

(d) die gasförmige Phase aus Stufe (c) auf 0,1 bis 40, insbesondere 0,2 bis 20 bar Überdruck bringt und die Temperatur soweit senkt, daß sich zwei Phasen bilden, nämlich eine gasförmige, im wesentlichen aus Inertgas bestehende Phase — die mit dem Inertgas für Stufe (c) vereinigt wird und eine flüssige, im wesentlichen aus alkanischem Kohlenwasserstoff bestehende Phase, und

(e) die flüssige Phase aus Stufe (d) in zwei Anteile zerlegt, derart, daß 2 bis 50, insbesondere 5 bis 15 Vol.% der flüssigen Phase bei 0 bis 2 bar Überdruck verdampft werden unter Bildung des ersten Anteils — der mit der gasförmigen Phase aus Stufe (c) vereinigt wird — und die verbleibende Menge der flüssigen Phase als zweiter Anteil — gegebenenfalls nach intermediärem Vorliegen in gasförmigen Zustand — wieder in den Polymerisationsraum zurückgeführt wird.

Eine bevorzugte Variante des erfindungsgemäßen Verfahrens ist dadurch gekennzeichnet, daß man in Stufe (d) die zur Senkung der Temperatur und zur Kondensation erforderliche Wärmemenge abführt mittels eines Wärmetauschers, dessen Wärme aufnehmendes Medium flüssiges, verdampfendes Äthylen ist, das nach dem Verdampfen seinerseits in den Polymerisationsraum eingebracht wird.

Eine besondere Ausgestaltung der genannten bevorzugten Variante des erfindungsgemäßen Verfahrens ist dadurch gekennzeichnet, daß man das als Wärme aufnehmendes Medium dienende flüssige Äthylen aus gasförmigem Äthylen gewinnt mittels eines Wärmetauschers, dessen Wärme aufnehmendes Medium flüssiger, verdampfender alkanischer Kohlenwasserstoff ist, der nach dem Verdampfen seinerseits in den Polymerisationsraum eingebracht wirt.

Eine weitere besondere Ausgestaltung der genannten bevorzugten Variante des erfindungsgemäßen Verfahrens ist dadurch gekennzeichnet, daß man das als Wärme aufnehmendes Medium dienende flüssige Äthylen aus gasförmigem Äthylen gewinnt mittels eines Wärmetauschers, dessen Wärme aufnehmendes Medium die flüssige Phase aus Stufe (d) ist.

Zur leichteren Anschaulichmachung des erfindungsgemäßen Verfahrens wird auf die nachstehend — rein schematisch zu verstehenden — Figuren 1 bis 4 hingewiesen, in denen — zum Zwecke der Vereinfachung —

ausschließlich die erfindungswesentlichen Vorrichtungen und Vorgänge aufgeführt sind.

Figure 1 gibt die allgemeine Ausgestaltung des Verfahrens wieder; — und damit die Arbeitsweise gemäß Patentanspruch 1.

Figure 2 repräsentiert die bevorzugte Variante des Verfahrens; — und damit die Arbeitsweise gemäß Patentanspruch 2.

Figure 3 widerspiegelt die erste besondere Ausgestaltung der bevorzugten Variante des Verfahrens; — und damit die Arbeitsweise gemäß Patentanspruch 3.

Figure 4 stellt die zweite besondere Ausgestaltung der bevorzugten Variante des Verfahrens dar; — und damit die Arbeitsweise gemäß Patentanspruch 4.

In den Figuren bedeuten:
(1) Polymerisationsraum
(2) Vorrichtung zur Durchführung der Stufe (a)
(3) Vorrichtung zur Durchführung der Stufe (b)
(4) Abgang der gasförmigen Phase aus Stufe (b)
(5) Abgang der festen Phase aus Stufe (b)
(6) Vorrichtung zur Durchführung der Stufe (c)
(7) Zugang des Inertgases zu Stufe (c)
(8) Abgang der festen Phase aus Stufe (c)
(9) Abgang der gasförmigen Phase aus Stufe (c)
(10) Vorrichtung zur Durchführung der Stufe (d)
(11) Abgang der gasförmigen Phase aus Stufe (d)
(12) Abgang der flüssigen Phase aus Stufe (d)
(13) Vorrichtung zur Durchführung der Stufe (e)
(14) Abgang des ersten Anteils aus Stufe (e)
(15) Abgang des zweiten Anteils aus Stufe (e)
(16) Zugang des flüssigen Äthylens zu Stufe (d) gemäß Patentanspruch 2
(17) Abgang des gasförmigen Äthylens aus Stufe (d) gemäß Patentanspruch 2
(18) Zugang des gasförmigen Äthylens gemäß Patentanspruch 3
(19) Abgang des flüssigen Äthylens gemäß Patentanspruch 3
(20) Zugang des flüssigen alkanischen Kohlenwasserstoffes gemäß Patentanspruch 3
(21) Abgang des gasförmigen alkanischen Kohlenwasserstoffes gemäß Patentanspruch 3
(22) Zugang des gasförmigen Äthylens gemäß Patentanspruch 4
(23) Abgang des flüssigen Äthylens gemäß Patentanspruch 4

Die durchführung des erfingungsgemäßen Verfahrens ist für den Fachmann mit keinen Schwierigkeiten verbunden, wie sich aus dem folgenden ergibt:

Die beim Verfahrens einzusetzenden Stoffe sind die einschlägig üblichen. Dies gilt für die Monomeren, wie insbesondere das Äthylen und die gegebenenfalls mitzuverwendenden Comonomeren, etwa Propen, Buten-1, i-Buten oder Hexen-1. Das nämliche gilt auch für den alkanischen Kohlenwasserstoff — der insbesondere n-Butan, i-Butan, i-Pentan oder n-Pentan bzw. auch Cyclohexan sein kann — und ebenso für die Katalysatoren, die in der Regel vom Phillips-Typ (meist Chromtrioxid auf einem silikatischen Träger) oder vom Ziegler-Typ (meist eine Halogen enthaltende Titanverbindung plus eine Alkylgruppen enthaltende Aluminiumverbindung) sein werden. Gleiches gilt auch für das zum Spülen in Stufe (c) dienende Inertgas, das vorzugsweise Stickstoff ist.

Die für das Verfahren erforderlichen Vorrichtungen, wie Polymerisationsreaktoren, Zu- und Abgangsorgane, Ventile zur Druckverminderung (Entspannungsventile), Entspannungsbehälter, Trockner, Spülapparate, Pumpen und Kompressoren für Druckerhöhung und zur Förderung, Kondensatoren und Verdampfer weisen wiederum an sich keine Besonderheiten auf und gehören zum wohlbekannten Stand der Technik.

Insgesamt läßt sich sagen, daß das Verfahren — abgesehen von seinem erfindungsgemäßen Teil — seit Jahren nicht nur in der Literatur beschrieben ist, sondern auch in der industriellen Praxis ausgeübt wird; — womit sich nähere Erläuterungen es Verfahrens insoweit erübrigen.

Zum erfindungsgemäßen Teil des neuen Verfahrens ist im einzelnen zu sagen:

In Stufe (d) wird die gasförmige Phase aus Stufe (c) auf einen bestimmten Druck gebracht und die Temperatur soweit gesenkt, daß sich zwei Phasen bilden, nämlich eine gasförmige, im wesentlichen aus Inertgas bestehende Phase (die mit dem Inertgas für Stufe (c) vereinigt wird) und eine flüssige, im wesentlichen aus alkanischem Kohlenwasserstoffe bestehende Phase.

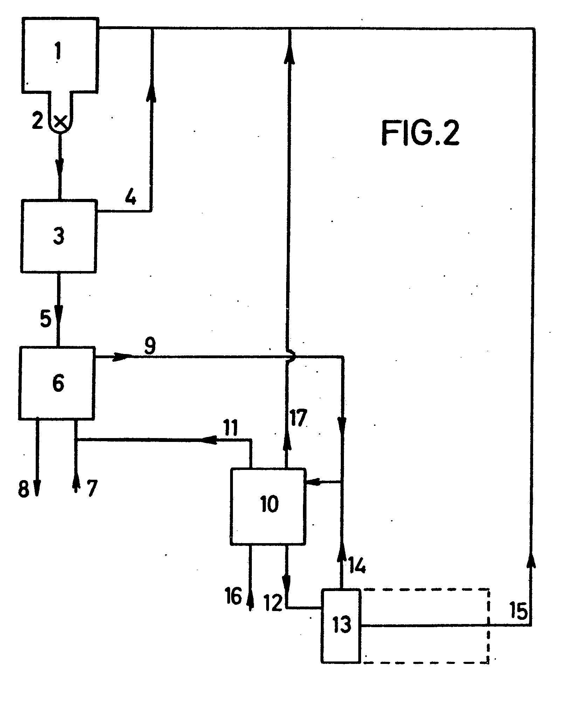

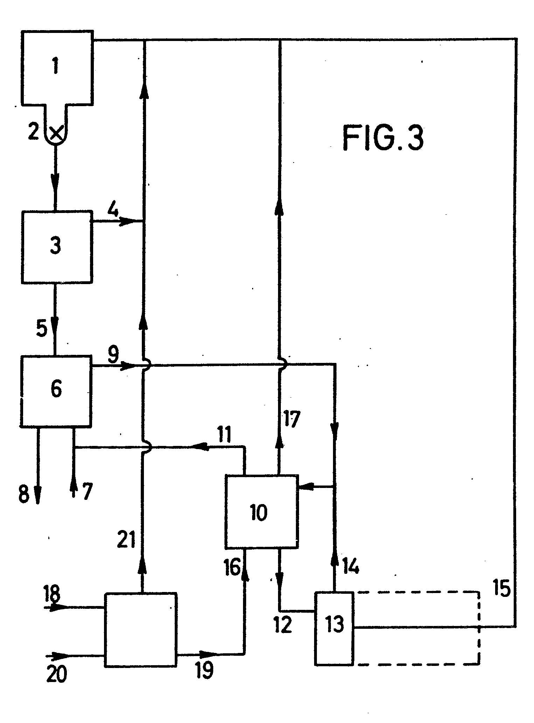

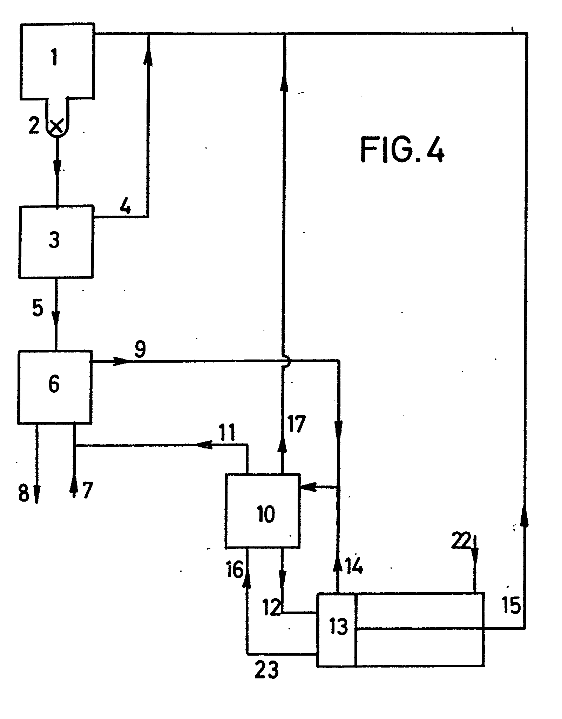

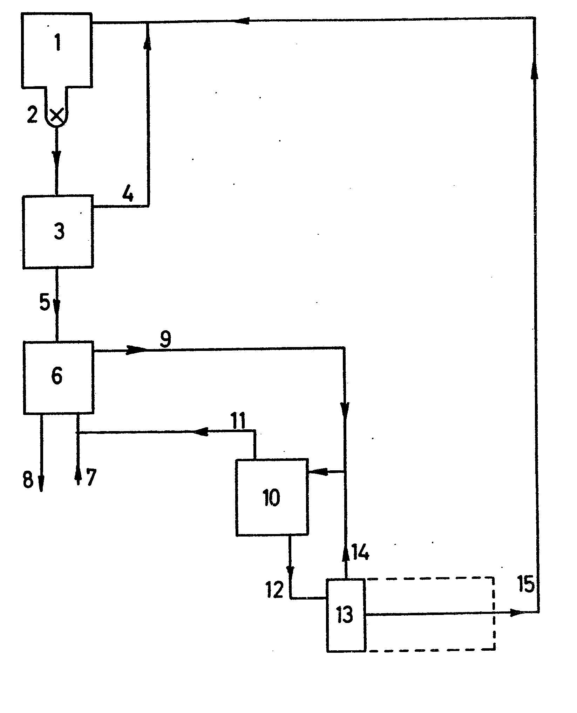

Hierbei hat sich gezeigt, daß es in der Regel zweckmäßig ist, so zu arbeiten, daß der Druck in Stufe (d) höher ist als in Stufe (c); — d.h., man wird im allgemeinen für Stufe (d) die aus Stufe (c) kommende gasförmige Phase komprimieren. Da andererseits der in Stufe (d) einzustellende Druck wiederum um so niedriger sein kann, je niedriger die einzustellende Temperatur ist (Zustandsdiagramm des alkanischen Kohlenwasserstoffs!), hat es sich als vorteilhaft erwiesen (vgl. Figur 2), wenn man in Stufe (d) die zur Senkung der Temperatur und zur Kondensation erforderliche Wärmemenge abführt mittels eines Wärmetauschers, dessen Wärme aufnehmendes Medium flüssiges, verdampfendes Äthylen ist (das nach dem Verdampfen seinerseits in den Polymerisationsraum eingebracht wird). — Flüssiges Äthylen steht in vielen Fällen als solches im Rahmen der Äthylenchemie zur Verfügung und kann beim Verdampfen ohne weiteres eine Temperatur von z.B. −70°C erreichen, also eine Temperatur, die wünschenwert tief ist, so daß man sich den Einsatz besonderer Kälte erzeugender Aggregate und/oder nicht verfahrenseigener Kälteträger ersparen kann. Steht flüssiges Äthylen nicht ohnehin zur Verfügung, kann es als integrierter Bestandteil im Rahmen des erfindungsgemäßen Verfahrens in einfacher und vorteilhafter Weise erhalten werden (vgl. Figur 3), indem man es aus gasförmigem Äthylen gewinnt mittels eines Wärmetauschers, dessen Wärme aufnehmendes Medium flüssiger, verdampfender alkanischer Kohlenwasserstoff — also wiederum ein verfahrenseigener Kälteträger — ist (der nach dem Verdampfen seinerseits in den Polymerisationsraum eingebracht wird). Der als Wärme aufnehmendes Medium dienende flüssige alkanische Kohlenwasserstoff seinerseits kann zweckmäßigerweise die flüssige Phase aus Stufe (d) sein (vgl. Figure 4).

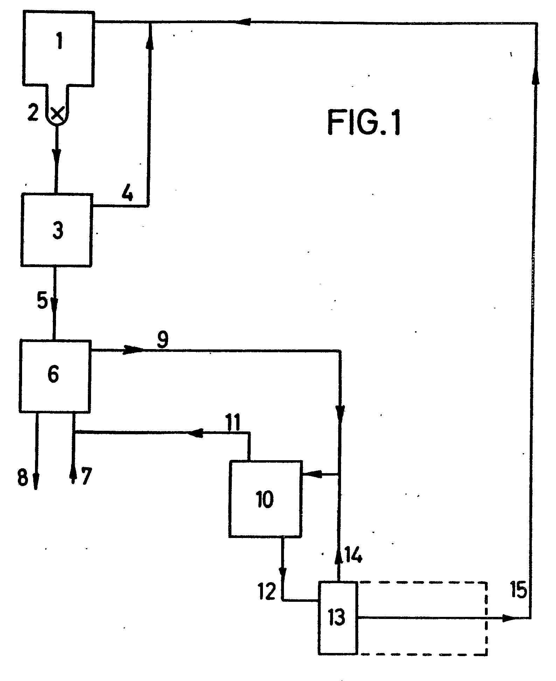

Zu Stufe (d) ist abschließend noch zu bemerken, daß durch Ausschleusen geringer Mengen der dort abgehenden gasförmigen Phase (vgl. die Figuren 1 bis 4, jeweils Bezugszahl (11)) verhindert werden kann, daß sich verunreinigende Fremdgase, z.B. Saurerstoff, im System anreichern.

In Stufe (e) wird die flüssige Phase aus Stufe (d) in zwei Anteile zerlegt, derart, daß eine gewisse Menge der flüssigen Phase bei einem bestimmten Druck verdampft wird under Bildung eines ersten Anteils (der mit der gasförmigen Phase aus Stufe (c) vereinigt wird) und die verbleibende Menge der flüssigen Phase als ein zweiter Anteil — gegebenenfalls nach intermediärem Vorliegen in gasfömigem Zustand — wieder in den Polymerisationsraum zurückgeführt wird.

Stufe (e) dient primär dazu, daß der wiedergewonnene, im Kreislauf in den Polymerisationsraum zurückzuführende alkanische Kohlenwasserstoff in reinem Zustand vorliegt, und zwar vorweigend in dem Sinne, daß in dem alkanischen Kohlenwasserstoff weder Inertgas noch verunreinigende, die Polymerisation nachteilig beeinflussende Fremdgase, wie insbesondere Saurerstoff, mitgeschleppt werden. Zu diesem Zweck wird in Stufe (e) ein Teil der aus Stufe (d) kommenden flüssigen Phase verdampft, und dadurch auch die unerwünschten Gase mit abgetrieben.

Der verbleibende flüssige, von unerwünschten Gasen befreite, Teil des alkanischen Kohlenwasserstoffs wird entweder ohne weiteres in flüssigem Zustand in den Polymerisationsraum zurückgeführt oder wird intermediär verdampft und danach erst in den Polymerisationsraum zurückgeführt. Die letztgenannte Verfahrensweise wird man vor allem dann wählen, wenn man daß negative Wärmepotential des flüssigen alkanischen Kohlenwasserstoffs direkt nutzen will, etwa zur Verflüssigung von gasförmigem Äthylen; — wie bei Stufe (d) näher erläutert (vgl. auch Figur 4). Da bei einer solchen Nutzung in aller Regel der flüssige alkanische Kohlenwasserstoff zur Gänze verdampft wird, können hierbei auch — so vorhanden — schwerwiegende Fremdstoffe als Verdampfungsrückstand aus dem System ausgeschleust werden.

Zur Durchführung von Stufe (e) eignen sich aus der Destillationstechnik bekannte Verdampfer. Sie sind zweckentsprechend entweder so ausgestattet, daß die aus Stufe (d) kommende flüssige Phase partiell verdampft wird (erster Anteil) und im übrigen im flüssigen Zustand verbleibt (zweiter Anteil), oder so ausgestattet, daß die aus Stufe (d) kommende flüssige Phase zur Gänze verdampft wird unter jeweils getrenntem Austrag des ersten und des zweiten verdampften Anteils. Für den erstgenannten Fall sind Teilverdampfer in Betracht zu ziehen, z.B. als liegende Doppelmantelrohrverdampfer ausgebildete Apparate. Für den letztgenannten Fall kommen ebensolche Teilverdampfer in Betracht, denen eine weitere Verdampfungszone oder ein weiterer Verdampfer — der ebenfalls ein Doppelmantelrohrverdampfer sein kann — nachgeschaltet ist; auch kommen als Kolonne wirkende Verdampfer in Betracht mit getrennten Abführungsorganen für den ersten und den zweiten verdampften Anteil sowie — gegebenenfalls — den Verdampfungsrückstand (= schwersiedende Fremdstoffe), der im allgemeinen den Sumpf im Verdampfer bilden wird.

## Beispiel

Es wird gearbeitet mit einem bei der kontinuierlichen Polymerisation von Äthylen üblichen Reaktor, dessen Reaktionsraum aus einem Rohrkreis von 25 m³ Inhalt besteht. Im Zuge der kontinuierlichen Polymerisation ist der Reaktionsraum gefüllt mit einer 33-gewichtsprozentigen Suspension von Polyäthylen in i-Butan (es ist für Äthylen ein Löser, für Polyäthylen ein Nichtlöser), die durch eine Propellerpumpe so rasch umgepumpt wird, daß eine turbulente Strömung vorhanden ist. In dem Reaktor wird eine Temperatur von 105°C aufrechterhalten. Im Zuge der kontinuierlichen Polymerisation bringt man stündlich 200 g eines bei der Polymerisation von Äthylen üblichen, Chromtrioxid auf einem silikatischen Trägerstoff enthaltenden Katalysators ein und hält einen Äthylenpartialdruck von 25 bar aufrecht.

Das Polymerisat wird isoliert — vgl. Figur 3 —, indem man

(a) aus dem Polymerisationsraum ein Gemisch aus im wesentlichen Polymerisat, i-Butan und Äthylen austrägt (stündlich etwa 5000 kg Gemisch, das zusammengesetzt ist aus etwa 3000 kg Polyäthylen, etwa 1800 kg i-Butan und etwa 200 kg Äthylen),

(b) das Gemisch aus Stufe (a) — durch Entspannen — auf 0,5 bar Überdruck sowie eine Temperatur von 90°C bringt unter Bildung von ($b_1$) einer gasförmigen, im wesentlichen aus Äthylen und i-Butan bestehenden Phase — deren Bestandteile wieder in den Polymerisationsraum zurückgeführt werden — und ($b_2$) einer festen, im wesentlichen aus Polymerisat mit 3 Gewichtsprozent, bezogen auf das Gewicht des Polymerisats, anhaftendem i-Butan bestehenden Phase, und

(c) die feste Phase ($b_2$) aus Stufe (b) bei 0,1 bar Überdruck sowie einer Temperatur von 110°C mit der 8-fachen Volumenmenge — bezogen auf das Polymerisat — Stickstoff spült unter Bildung von ($c_1$) einer festen, aus weitgehend reinem Polymerisat bestehenden Phase — die als solche separiert wird — und ($c_2$) einer gasförmigen, im wesentlichen aus i-Butan und Stickstoff bestehenden Phase.

Als kennzeichnend für das erfindungsgemäße Verfahren wird des weiteren so gearbeitet, daß man zusätzlich

(d) die gasförmige Phase ($c_2$) aus Stufe (c) — durch Kompression — auf 4 bar Überdruck bringt und — in einem Kondensator — die Temperatur soweit senkt (-60°C), daß sich zwei Phasen bilden, nämlich ($d_1$) eine gasförmige, im wesentlichen aus Stickstoff bestehende Phase — die (nach dem Ausschleusen eines Anteils von 5 Volumen-%) mit dem Stickstoff für Stufe (c) vereinigt wird — und ($d_2$) eine flüssige, im wesentlichen aus i-Butan bestehende Phase, und

(e) die flüssige Phase ($d_2$) aus Stufe (d) in zwei Anteile zerlegt, derart, daß ($e_1$) — in einem Verdampfer — 8 Volumen-% der flüssigen Phase — unter Entspannung — bei 0,6 bar Überdruck verdampft werden unter Bildung des ersten Anteils — der mit der gasförmigen Phase aus Stufe (c) vereinigt wird — und ($e_2$) die verbleibende Menge der flüssigen Phase (stündlich etwa 90 kg) als zweiter Anteil — nach intermediärem Vorliegen in gasförmigem Zustand (der bewirkt wird, indem man den zweiten Anteil ebenfalls in einem Verdampfer bei 0,6 bar Überdruck verdampft) — wieder in den Polymerisationsraum zurückgeführt wird.

Im einzelnen ist diese Arbeitsweise so ausgestaltet, daß man in Stufe (d) die zur Senkung der Temperatur und zur Kondensation erforderliche Wärmemenge abführt mittels eines Kondensators (Wärmetauscher), dessen Wärme aufnehmendes Medium flüssiges, verdampfendes Äthylen ist, das nach dem Verfahren seinerseits in den Polymerisationsraum eingebracht wird. — Das dabei als Wärme aufnehmendes Medium dienende flüssige Äthylen wiederum wird gewonnen aus gasförmigem, unter 60 bar Überdruck stehendem, Äthylen mittels eines Kondensators (Wärmetauschers), dessen Wärme aufnehmendes Medium flüssiges, verdampfendes i-Butan ist, das nach dem Verdampfen seinerseits in den Polymerisationsraum eingebracht wird.

## Patentansprüche

1. Verfahren zum kontinuierlichen Herstellen von Homopolymerisaten des Äthylens oder Copolymerisaten des Äthylens mit bis zu 15 Mol.% — bezogen auf das Äthylen — $C_3$- bis $C_8$-$\alpha$-Monoolefinen durch katalytische Polymerisation des bzw. der Monomeren bei Temperaturen von 60 bis 115°C und Äthylenpartialdrücken von 1 bis 40 bar in einem unter den Polymerisationsbedingungen flüssigen alkanischen $C_4$- bis $C_6$-Kohlenwasserstoff, der für das Monomere bzw. die Monomeren ein Löser, für das gebildete Polymerisat ein Nichtlöser ist, und wobei das Polymerisat isoliert wird, indem man

(a) aus dem Polymerisationsraum ein Gemisch aus im wesentlichen Polymerisat, alkanischem Kohlenwasserstoff und Monomerem bzw. Monomeren austrägt,

(b) das Gemisch aus Stufe (a) auf 0,1 bis 2 bar Überdruck sowie eine Temperatur von 20 bis 120°C bringt unter Bildung einer gasförmigen, im wesentlichen aus dem bzw. den Monomeren und alkanischen Kohlenwasserstoff bestehenden Phase — deren Bestandteile wieder in den Polymerisationsraum zurückgeführt werden — und einer festen, im wesentlichen aus Polymerisat mit 0,1 bis 8 Gewichtsprozent, bezogen auf das Gewicht des Polymerisats, anhaftendem alkanischen Kohlenwasserstoff bestehenden Phase, und

(c) die feste Phase aus Stufe (b) bei 0 bis 1 bar Überdruck sowie einer Temperatur von 20 bis 130°C mit der 1- bis 30-fachen Volumenmenge — bezogen auf das Polymerisat — Inertgas spült unter Bildung einer festen, aus weitgehend reinem Polymerisat bestehenden Phase — die als solche separiert wird — und einer gasförmigen, im wesentlichen aus alkanischem Kohlenwasserstoff und Inertgas bestehenden Phase, dadurch gekennzeichnet, daß man als zusätliche Maßnahmen

(d) die gasförmige Phase aus Stufe (c) auf 0,1 bis 40, bar Überdruck bringt und die Temperatur soweit senkt, daß sich zwei Phasen bilden, nämlich eine gasförmige, im wesentlichen aus Inertgas bestehende Phase — die mit dem Inertgas für Stufe (c) vereinigt wird und eine flüssige, im wesentlichen aus alkanischem Kohlenwasserstoff bestehende Phase, und

(e) die flüssige Phase aus Stufe (d) in zwei Anteile zerlegt, derart, daß 2 bis 50 Volumenprozent der flüssigen Phase bei 0 bis 2 bar Überdruck verdampft werden unter Bildung des ersten Anteils — der mit der gasförmigen Phase aus Stufe (c) vereinigt wird — und die verbleibende Menge der flüssigen Phase als zweiter Anteil — gegebenenfalls nach intermediärem Vorliegen in gasförmigen Zustand — wieder in den Polymerisationsraum zurückgeführt wird.

2. Verfahren gemäß Patentanspruch 1, dadurch gekennzeichnet, daß man in Stufe (d) die zur Senkung der Temperatur und zur Kondensation erforderliche Wärmemenge abführt mittels eines Wärmetauschers, dessen Wärme aufnehmendes Medium flüssiges, verdampfendes Äthylen ist, das nach dem Verdampfen seinerseits in den Polymerisationsraum eingebracht wird.

3. Verfahren gemäß Patentanspruch 2, dadurch gekennzeichnet, daß man das als Wärme aufnehmendes Medium dienende flüssige Äthylen aus gasförmigem Äthylen gewinnt mittels eines Wärmetauschers, dessen Wärme aufnehmendes Medium flüssiger, verdampfender alkanischer Kohlenwasserstoff ist, der nach dem Verdampfen seinerseits in den Polymerisationsraum eingebracht wird.

4. Verfahren gemäß Patentanspruch 2, dadurch gekennzeichnet, daß man das als Wärme aufnehmendes Medium dienende flüssige Äthylen aus gasförmigem Äthylen gewinnt mittels eines Wärmetauschers, dessen Wärme aufnehmendes Medium die flüssige Phase aus Stufe (d) ist.

**Claims**

1. A process for the continuous manufacture of ethylene homopolymers or of copolymers of ethylene with up to 15 mole %, based on the ethylene, of $\alpha$-monoolefins of 3 to 8 carbon atoms, by catalytically polymerizing the monomer or monomers at from 60 to 115°C and at ethylene partial pressures of from 1 to 40 bars in an alkane hydrocarbon of 4 to 6 carbon atoms, which is liquid under the polymerization conditions and is a solvent for the monomer or monomers but a non-solvent for the polymer formed, the polymer being isolated by

(a) discharging, from the polymerization chamber, a mixture consisting essentially of polymer, alkane hydrocarbon and monomer or monomers,

(b) bringing the mixture from stage (a) to from 0.1 to 2 bars above atmospheric pressure and to from 20 to 120°C, to form a gaseous phase, consisting essentially of the monomer or monomers and alkane hydrocarbon, the constituents of which phase are recycled to the polymerization chamber, and a solid phase consisting essentially of polymer with from 0.1 to 8 per cent by weight, based on the weight of the polymer, of alkane hydrocarbon adhering thereto, and

(c) flushing the solid phase from stage (b) at from 0 to 1 bars above atmospheric pressure and at from 20 to 130°C, with an amount of inert gas which is from 1 to 30 times the amount by volume of the polymer, to form a solid phase consisting of substantially pure polymer, which is separated off as such, and a gaseous phase consisting essentially of alkane hydrocarbon and inert gas, characterized in that, as additional measures

(d) the gaseous phase from stage (c) is brought to from 0.1 to 40 bars above atmospheric pressure and the temperature is lowered to such an extent that two phases form, namely a gaseous phase essentially consisting of inert gas, which is combined with the inert gas for stage (c), and a liquid phase consisting essentially of alkane hydrocarbon, and

(e) the liquid phase from stage (d) is separated into two portions, by evaporating from 2 to 50 per cent by volume of the liquid phase at from 0 to 2 bars above atmospheric pressure to form the first portion, which is combined with the gaseous phase from stage (c), and recycling the remaining amount of the liquid phase, as the second portion which may or may not be in the gaseous state in an intermediate stage, to the polymerization chamber.

2. A process as claimed in claim 1, characterized in that, in stage (d), the amount of heat required to be removed in order to lower the temperature and effect condensation is removed by means of a heat exchanger of which the heat-absorbing medium is liquid, evaporating ethylene, which after evaporation is introduced into the polymerization chamber.

3. A process as claimed in claim 2, characterized in that the liquid ethylene which serves as the heat-absorbing medium is obtained from gaseous ethylene by means of a heat exchanger, of which the heat-absorbing medium is a liquid, evaporating alkane hydrocarbon, which after evaporation is introduced into the polymerization chamber.

4. A process as claimed in claim 2, characterized in that the liquid ethylene which serves as the heat-absorbing medium is obtained from gaseous ethylene by means of a heat exchanger of which the heat-absorbing medium is the liquid phase from stage (d).

## Revendications

1. Procédé pour la préparation en continu d'homopolymérisats d'éthylène ou copolymérisats d'éthylène avec jusqu'à 15 moles% — rapportés à l'éthylène — d' $\alpha$-monooléfines en $C_3$ à $C_8$ par polymérisation catalytique du ou des monomères à des températures de 60 à 115°C et des pressions partielles d'éthylène de 1 à 40 bars dans un hydrocarbure en $C_4$ à $C_6$, alcalin, liquide dans les conditions de la polymérisation et qui est un solvant pour le ou les monomères et un non-solvant pour le polymérisat formé, ledit polymérisat étant isolé, procédé selon lequel:

a) on évacue de l'espace de polymérisation un mélange constitué essentiellement de polymérisat, d'hydrocarbure alcalin et de monomère(s),

b) on porte le mélange du stade a) à une pression réelle de 0,1 à 2 bars et à une température de 20 à 120°C avec formation d'une phase constituée du ou des monomères et de l'hydrocarbure alcalin — phase dont on ramène les parties constitutives à l'espace de polymérisation — et une phase solide, constituée essentiellement de polymérisat et 0,1 à 8% en poids, rapportés au poids du polymérisat, d'hydrocarbure alcalin adhérent, et

c) on balaie la phase solide du stade b), à une pression réelle de 0 à 1 bar et une température de 20 à 130°C, avec une quantité en volume d'égale à triple de celle du polymérisat, avec formation d'une phase solide constituée pour une large partie de polymérisat pur — qui est séparé en tant que tel — et d'une phase gazeuse, constituée essentiellement d'hydrocarbure alcalin et de gaz inerte, caractérisé par le fait que, comme mesures supplémentaires.

d) on porte la phase gazeuse du stade c) à une pression réelle de 0,1 à 40 bars et on abaisse la température jusqu'à ce qu'il se forme deux phases, à savoir une phase gazeuse, constituée essentiellement de gaz inerte — qui est réuni avec le gaz inerte du stade c) — et une phase liquide constituée essentiellement d'un hydrocarbure alcalin, et

e) on décompose la phase liquide du stade d) en deux parties, en vaporisant 2 à 50% en volume de la phase liquide, à une pression réelle de 0 à 2 bars avec formation de la première partie — que l'on réunit avec la phase gazeuse du stade c) — et la quantité restante de la phase gazeuse, en tant que seconde partie — éventuellement après passage intermédiaire à l'état gazeux — est ramenée dans l'espace de polymérisation.

2. Procédé selon la revendication 1, caractérisé par le fait que l'on enlève, au stade d) la quantité de chaleur nécessaire à l'abaissement de la température et à la condensation, au moyen d'un échangeur de chaleur dont le fluide absorbeur de chaleur est de l'éthylène liquide qui se vaporise, éthylene qui après la vaporisation, est ramenée, à son tour, dans l'espace de polymérisation.

3. Procédé selon la revendication 2, caractérisé par le fait qu'on obtient l'éthylene liquide, servant de fluide absorbeur de la chaleur, à partir d'éthylène gazeux au moyen d'un échangeur de chaleur dont le fluide absorbeur de la chaleur est un hydrocarbure liquide, alcalin qui se vaporise et qui, après la vaporisation, est à son tour introduit dans l'espace de polymérisation.

4. Procédé selon la revendication 2, caractérisé par le fait que l'on obtient l'éthylene servant de fluide absorbeur de la chaleur à partir d'éthylene gazeux au moyen d'un échangeur de chaleur dont le fluide absorbeur de chaleur est la phase liquide du stade d).

FIG.1

FIG.2

FIG.3

FIG.4